# EUROPÄISCHE PATENTSCHRIFT

(11) **EP 1 537 344 B1**
(45) Veröffentlichungstag und Bekanntmachung des Hinweises auf die Patenterteilung: **26.03.2008**
(21) Anmeldenummer: 03794807.2
(22) Anmeldetag: 03.09.2003
(51) Int. Cl.: F16H 1/00

(54) **VERFAHREN UND VORRICHTUNG ZUM DURCHFÜHREN EINER SCHLUPFREGELUNG BEI EINEM STUFENLOSEN GETRIEBE**
METHOD AND DEVICE FOR CARRYING OUT A SKID CONTROL FOR A STEPLESS GEARBOX
PROCEDE ET DISPOSITIF DE REGULATION DU PATINAGE SUR UNE TRANSMISSION A VARIATION CONTINUE

(30) Priorität: 04.09.2002 DE 10240841
(43) Veröffentlichungstag der Anmeldung: 08.06.2005
(73) Patentinhaber: LuK Lamellen und Kupplungsbau Beteiligungs KG, 77815 Bühl (DE)
(72) Erfinder: REUSCHEL, Michael, 77833 Ottersweier (DE)
(74) Vertreter: Duschl, Edgar Johannes
(86) Internationale Anmeldenummer: PCT/DE2003/002913
(87) Internationale Veröffentlichungsnummer: WO 2004/025144

(56) Entgegenhaltungen:
- EP-A- 0 760 441
- EP-A- 1 158 216
- WO-A-01/20198
- US-A- 5 707 314
- US-A- 6 099 424

## Beschreibung

Die vorliegende Erfindung bezieht sich auf ein Verfahren und eine Vorrichtung zum Durchführen einer Schlupfregelung bei einem stufenlosen Getriebe, insbesondere einem Umschlingungsgetriebe, bei dem ein antreibender Scheibensatz und ein angetriebener Scheibensatz über ein Umschlingungsmittel zur Momentenübertragung miteinander gekoppelt sind, entsprechend dem Oberbegriff der Ansprüche 1, 14 and wie aus der WO-A-01/20198 bekannt ist.

Aus der Fahrzeugtechnik sind stufenlosen Getriebe, wie z. B. Umschlingungsgetriebe bekannt, welche üblicherweise einen antreibenden Scheibensatz und einen angetriebenen Scheibensatz aufweisen, die mittels eines Umschlingungsmittels zur Momentenübertragung miteinander gekoppelt sind. Bei einer frei gesteuerten Anpresskraft an den Scheibensätzen ist es für die Übersetzungsregelung bei dem Umschlingungsgetriebe hilfreich, wenn der genaue Verlauf des Kräfteverhältnisses in Abhängigkeit von einer Sicherheit bzw. einem Sicherheitsfaktor bekannt ist. Bei bestimmten Fahrsituationen, z. B. bei radseitigen Stößen oder dergleichen, ist es erforderlich, dass der Sicherheitsfaktor erhöht werden sollte. Dies kann bei der Übersetzungsregelung bei den bekannten Umschlingungsgetrieben nicht berücksichtigt werden, sodass die Auswirkungen des sich veränderten Kraftverhältnisses auf die Übersetzung des Variators nicht vermindert bzw. aufgehoben werden können. Dadurch kann der Komfort im Fahrzeug nachteilig beeinflusst werden.

Der Erfindung liegt die Aufgabe zugrunde ein Verfahren und eine Vorrichtung vorzuschlagen, um die Übersetzungsregelung bei einem stufenlosen Getriebe weiter zu optimieren.

Diese Aufgabe kann verfahrensmäßig durch ein Verfahren zum Durchführen einer Schlupfregelung bei einem stufenlosen Getriebe, insbesondere einem Umschlingungsgetriebe, bei dem ein antreibender Scheibensatz und ein angetriebener Scheibensatz über ein Umschlingungsmittel zur Momentenübertragung miteinander gekoppelt wird, gelöst werden, bei dem das Kraftverhältnis (Zeta) zwischen dem antreibenden Scheibensatz und dem getriebenen Scheibensatz eines Variators in Abhängigkeit von der Sicherheit eingelernt wird. Auf diese Weise kann eine Adaption des Kraftverhältnisses zwischen dem antreibenden und angetriebenen Scheibensatz eines Variators in Abhängigkeit von Sicherheitskriterien (Sicherheit) bei einem Fahrzeug realisiert werden. Dadurch kann die Übersetzungsregelung, insbesondere bei stufenlosen Getrieben erheblich verbessert werden.

Als Sicherheit wird dabei das Kraftverhältnis an einem aktuellen Betriebspunkt zwischen der tatsächlichen Anpresskraft und der Kraft, bei welcher ein Durchrutschen des Umschlingungsmittels erfolgt, bezeichnet. Wenn beispielsweise die Sicherheit den Wert 1,0 annimmt, befindet man sich am Rutschpunkt des Umschlingungsmittels.

Es ist möglich, dass zunächst der Rutschpunkt bestimmt wird. Dies kann beispielsweise durch eine Überlagerung einer Schwingung bei dem Anpressdruck und einer Kreuzkorrelation zwischen den Drehzahlen der Scheibensätze oder dergleichen erfolgen. Bei dem erfindungsgemäßen Verfahren wird bei einer sehr hohen Anpresssicherheit begonnen die Sicherheit zu reduzieren, wenn der Rutschpunkt bekannt ist. Dies kann bis zum Erreichen des Rutschpunktes oder auch bis zu dem Zeitpunkt, der kurz vor dem Rutschpunkt liegt, durchgeführt werden. Vorzugsweise kann diese Vorgehensweise durch eine Reduktion der Anpresskraft z. B. an dem angetriebenen Scheibensatz realisiert werden. Dabei kann die Übersetzungsregelung z. B. aktiv bleiben und die Änderung des Kraftverhältnisses bzw. des Zeta-Wertes durch eine entsprechende Ansteuerung der Scheibensatzdrücke ausgeglichen werden.

Der Zeta-Wert bzw. das Kraftverhältnis zwischen dem antreibenden und dem angetriebenen Scheibensatz kann durch Kenntnis der Drehzahlen, der Übersetzung und der Scheibensatzdrücke bzw. der Ansteuergrößen für die Scheibensätze bestimmt bzw. berechnet werden. Die entsprechenden Zeta-Werte können vorzugsweise als Funktion der Sicherheit abgespeichert werden. Somit kann das Kraftverhältnis in vorteilhafter Weise vorgesteuert werden, um immer eine optimale Anpresskraft bei ausreichender Sicherheit zu ermöglichen.

Im Rahmen einer Weiterbildung der Erfindung kann vorgesehen sein, dass das Verfahren bevorzugt bei quasistatischen Betriebszuständen mit konstanter Sicherheit und/oder bei einem bewussten langsamen Reduzieren der Sicherheit durchgeführt wird. Diese Betriebszustände liegen üblicherweise bevorzugt im Overdrivebereich (OD) bei Konstantfahrten vor. Weil der Anpressbedarf vom Eingangsmoment und damit vom Motormoment abhängig ist, sollte das Motormoment nicht zu hoch sein, um einen möglichst großen Sicherheitsbereich durchfahren zu können. Bevorzugt wird ein Bereich zwischen 50 und 100 Nm verwendet. Jedoch sind auch andere Bereiche und Betriebszustände möglich.

Gemäß einer weiteren Ausgestaltung muss die erfindungsgemäße Adaption nicht notwendigerweise kontinuierlich durchgeführt werden. Es ist auch möglich, dass diese abschnittsweise oder dergleichen betrieben wird. Demzufolge kann z. B. ein Übersetzungspunkt im Getriebe mit unterschiedlichen Sicherheiten zeitlich nacheinander angefahren werden. Die zu den jeweiligen Betriebspunkten ermittelten Werte des Kraftverhältnisses (Zeta) können in einer entsprechenden Speichertabelle oder dergleichen abgespeichert werden und/oder auch in einem parametrisierten Modell verwendet werden. Mittels dieser Adaption ist eine individuelle Anpassung der Übersetzungsregelung an das jeweilige Getriebe möglich.

Bei dem vorgeschlagenen Verfahren ist es auch denkbar, dass der Zeta-Wert in Abhängigkeit von der Sicherheit und der Übersetzung zur Adaption abgelegt bzw. gespeichert wird. Auf diese Weise kann dann, anstatt einer Kennlinie, ein Kennfeld adaptiert werden.

Gemäß einer vorteilhaften Weiterbildung kann auch eine geeignete Abschätzung der Drücke in den Scheibensätzen durchgeführt werden. Für die Berechnung des Zeta-Wertes ist die Kenntnis aller Kraftkomponenten notwendig. Neben den Federkräften werden auch Kräfte berücksichtigt, welche aus den statischen und dynamischen Drücken berechnet werden. Besonders vorteilhaft ist es, wenn diese Drücke bekannt sind. Bei dem erfindungsgemäßen Verfahren ist es jedoch nicht unbedingt erforderlich diese statischen Drücke zu kennen, denn es sind jeweils Annahmen über mittlere Kennlinien der Hydraulikventile ausreichend. Da der Ansteuerstrom der Hydraulikventile bekannt ist, kann aus diesem Wert ein theoretischer Druckwert berechnet werden. Der Fehler zwischen einer approximierten und der realen Ventilkennlinie kann dadurch kompensiert werden, dass bevorzugt bei der Ansteuerung der Scheibensätze diese approximierten Ventilkennlinien verwendet werden. Somit kann eine Abweichung auf einfachste Weise kompensiert werden.

Im Rahmen einer weiteren Ausgestaltung der vorliegenden Erfindung kann vorgesehen sein, dass bei dem erfindungsgemäßen Verfahren bevorzugt im laufenden Fahrzeugbetrieb ein Zeta-Maximum berechnet wird. Dabei kann für eine feste Anpresskraft am getriebenen Scheibensatz das Eingangsmoment derart erhöht werden, dass es zum Durchrutschen des Umschlingungsmittels des Getriebes kommt.

Es ist auch möglich, dass das Eingangsmoment konstant gehalten und dabei die Anpresskraft abgesenkt wird. Das Kraftverhältnis (Zeta) steigt dabei zunächst an und fällt vor dem Durchrutschen des Umschlingungsmittels (Rutschpunkt) wieder ab. Der Abstand zum Rutschpunkt von dem Zeta-Maximum-Wert liegt abhängig von der Übersetzung etwa bei 10% - 30%. Dieser Abstand ist in der Regel unabhängig von der Anpresskraft.

Es hat sich gezeigt, dass für das Getriebe ein Betrieb, welcher im linken Bereich von dem Zeta-Maximum liegt, besonders vorteilhaft ist. Im Betrieb ist es z. B. möglich, dass die Verläufe der Kraftverhältnisse bei einer Reduktion der Anpresskraft aufgezeichnet bzw. abgespeichert werden. Wenn festgestellt wird, dass sich das Zeta-Maximum zu einer definierten Anpresskraft verschoben hat, hat sich der tatsächliche Anpressbedarf geändert.

Mit den bekannten Zeta-Max-Werten können entsprechende Korrekturen der Betriebsparameter durchgeführt werden, um sicherzustellen, dass die Anpressung in den gewünschten Betriebsbereichen (links vom Zeta-Maximalwert) realisiert wird.

Vorzugsweise können bei dem erfindungsgemäßen Verfahren die Betriebsparameter der maximalen Zeta-Werte z. B. über der Sicherheit und/oder der Übersetzung abgespeichert werden.

Durch die vorgeschlagene Korrektur der Reglerparameter wird insbesondere die Fahrbarkeit bzw. der Fahrkomfort bei Fahrzeugen mit stufenlosen Getrieben erheblich verbessert. Ferner werden Störeinflüsse über den Zeta-Wert maßgeblich reduziert. Darüber hinaus wird mit dem erfindungsgemäßen Verfahren eine Überwachung des tatsächlichen Anpresskraftbedarfes realisiert.

Des weiteren kann die der Erfindung zugrunde liegende Aufgabe durch eine Vorrichtung zum Durchführen einer Schlupfregelung bei einem stufenlosen Getriebe, insbesondere einem Umschlingungsgetriebe, bei der ein antreibender Scheibensatz und ein angetriebener Scheibensatz über ein Umschlingungsmittel zur Momentenübertragung miteinander gekoppelt ist, insbesondere zum Durchführen des vorgeschlagenen Verfahrens, gelöst werden, bei der eine Einrichtung zum Einlernen eines Kraftverhältnisses (Zeta) zwischen dem antreibenden Scheibensatz und dem getriebenen Scheibensatz eines Variators in Abhängigkeit von einem Sicherheitswert vorgesehen ist.

Weitere Vorteile und vorteilhafte Ausgestaltungen ergeben sich aus den Unteransprüchen und den nachfolgend beschriebenen Zeichnungen.
Es zeigen:
- Figur 1: ein Flussdiagramm einer möglichen Ausgestaltung der Erfindung; und
- Figur 2: ein Diagramm mit der Darstellung der Zeta-Max-Messung

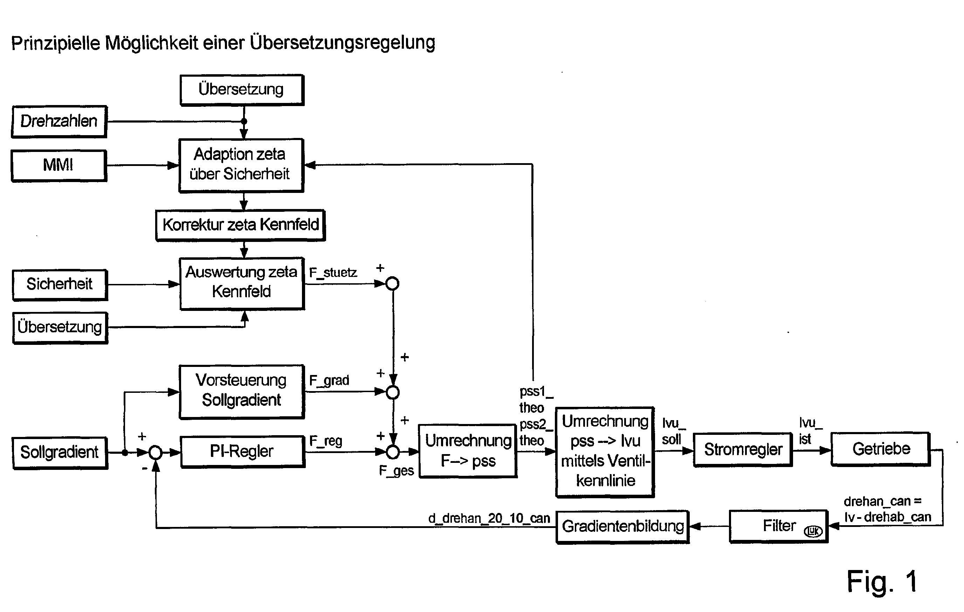

Eine geeignete Abschätzung der Drücke in den Scheibensätzen wird anhand eines Flussdiagramms in Figur 1 dargestellt. Für die Berechnung des Zeta-Wertes ist die Kenntnis aller Kraftkomponenten notwendig. Neben den Federkräften werden auch Kräfte berücksichtigt, welche aus den statischen und dynamischen Drücken berechnet werden.

Bei der vorgeschlagenen Abschätzung werden jeweils Annahmen über mittlere Kennlinien der Hydraulikventile verwendet. Da der Ansteuerstrom der Hydraulikventile bekannt ist, kann aus diesem Wert ein theoretischer Druckwert berechnet werden. Der Fehler zwischen der approximierten und der realen Ventilkennlinie wird dadurch kompensiert, dass bei der Ansteuerung der Scheibensätze diese approximierten Ventilkennlinien verwendet werden.

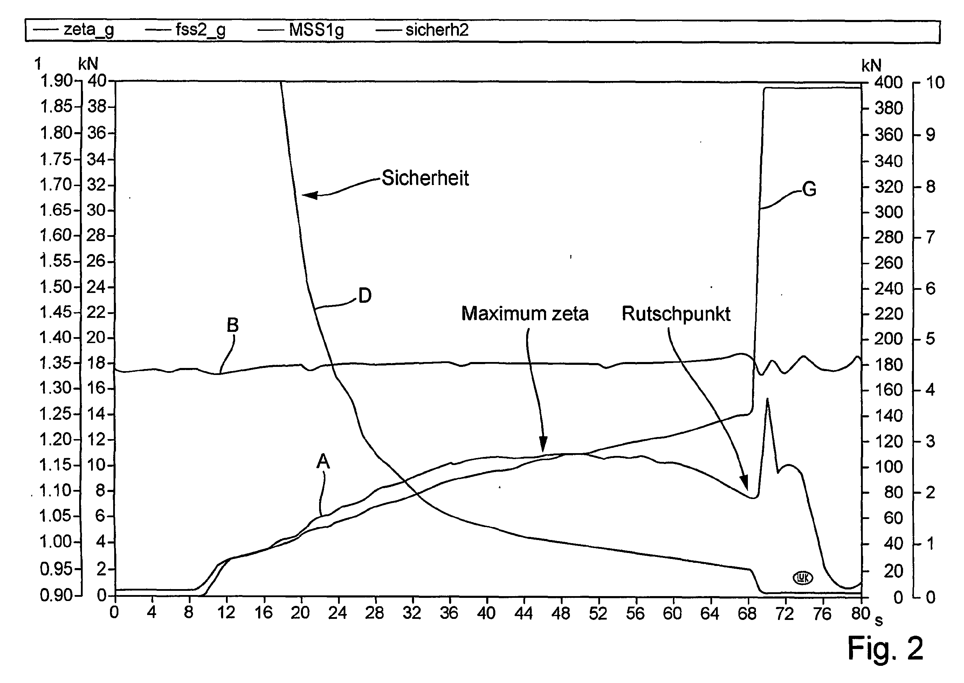

In Figur 2 sind die Verläufe von Zeta (A), der Anpresskraft (B) an dem getriebenen Scheibensatz, dem Eingangsmotormoment (C) und der Sicherheit (D) dargestellt.

Bei der erfindungsgemäßen Bestimmung des Zeta-Max-Wertes kann für eine nahezu konstante Anpresskraft am getriebenen Scheibensatz das Eingangsmoment derart erhöht werden, dass es zum Durchrutschen des Umschlingungsmittels des Getriebes kommt. Nach dem Zeta-Maximum wird der Rutschpunkt anhand einer Reduzierung des Zeta-Werts deutlich. Insgesamt ergibt sich, dass für das stufenlose Getriebe ein Betrieb besonders vorteilhaft ist, wenn Werte verwendet werden, welche vor dem Zeta-Maximum liegen.

## Patentansprüche

1. Verfahren zum Durchführen einer Schlupfregelung bei einem stufenlosen Getriebe, insbesondere bei einem Umschlingungsgetriebe, bei dem ein antreibender Scheibensatz und ein angetriebener Scheibensatz über ein Umschlingungsmittel zur Momentenübertragung miteinander gekoppelt wird, wobei ein Kraftverhältnis (Zeta) zwischen dem antreibenden Scheibensatz und dem angetriebenen Scheibensatz eines Variators in Abhängigkeit von einem Sicherheitswert eingelernt wird, wobei als Sicherheitswert das Kraftverhältnis an einem tatsächlichen Betriebspunkt zwischen der tatsächlichen Anpresskraft und der Kraft, bei welcher ein Durchrutschen des Umschlingungsmittels erfolgt, verwendet wird und **dadurch gekennzeichnet, dass** das Verfahren bei quasistatischen Betriebszuständen des Getriebes durchgeführt wird, wobei dass das Kräfteverhältnis (Zeta) abschnittsweise adaptiert wird.

2. Verfahren nach Anspruch 1, **dadurch gekennzeichnet, dass** die Anpresskraft bei bekanntem Rutschpunkt an dem angetriebenen Scheibensatz bis kurz vor Erreichen des Rutschpunktes bei dem Umschlingungsmittel reduziert wird.

3. Verfahren nach Anspruch 2, **dadurch gekennzeichnet, dass** bei der Reduzierung der Anpresskraft eine Übersetzungsregelung bei dem Variator aktiv gehalten wird und die Änderung der Anpresskraft durch eine entsprechende Ansteuerung des Druckes an zumindest einem Scheibensatz ausgeglichen wird.

4. Verfahren nach einem der vorangehenden Ansprüche, **dadurch gekennzeichnet, dass** das Kraftverhältnis als Funktion der Sicherheit abgespeichert wird.

5. Verfahren nach einem der vorhergehenden Ansprüche, **dadurch gekennzeichnet, dass** als quasistatischer Betriebszustand ein Betriebszustand im Overdrivebereich (OD) bei Konstantfahrten verwendet wird.

6. Verfahren nach einem der vorangehenden Ansprüche, **dadurch gekennzeichnet, dass** ein Übersetzungsverhältnis des Variators mit unterschiedlichen Werten des Kraftverhältnisses zeitlich nacheinander angefahren wird.

7. Verfahren nach Anspruch 6, **dadurch gekennzeichnet, dass** die zu den jeweiligen Betriebszuständen ermittelten Werte des Kraftverhältnisses (Zeta) gespeichert werden und/oder in einem parametrisierten Modell verwendet werden.

8. Verfahren nach einem der vorangehenden Ansprüche, **dadurch gekennzeichnet, dass** das Kraftverhältnis (Zeta) in Abhängigkeit der Sicherheit und der Übersetzung des Variators abgelegt wird.

9. Verfahren nach einem der vorangehenden Ansprüche, **dadurch gekennzeichnet, dass** der Druck in den beiden Scheibensätzen abgeschätzt wird, indem aus dem bekannten Ansteuerstrom der Hydraulikventile der Scheibensätze ein theoretischer Druckwert berechnet wird.

10. Verfahren nach einem der vorangehenden Ansprüche, **dadurch gekennzeichnet, dass** im laufenden Fahrzeugbetrieb ein Maximum des Kraftverhältnisses (Zeta) berechnet wird.

11. Verfahren nach Anspruch 10, **dadurch gekennzeichnet, dass** bei einer vorgegebenen Anpresskraft an dem angetriebenen Scheibensatz das Eingangsmotormoment derart erhöht wird, dass es zum Durchrutschen des Umschlingungsmittels des Getriebes kommt.

12. Verfahren nach Anspruch 10, **dadurch gekennzeichnet, dass** das Eingangsmotormoment konstant gehalten und dabei die Anpresskraft abgesenkt wird.

13. Verfahren nach einem der Ansprüche 10 bis 12, **dadurch gekennzeichnet, dass** mit gelernten Zeta-Max-Werten die Betriebsparameter des Getriebes korrigiert werden, um eine optimale Anpressung sicherzustellen.

14. Vorrichtung zum Durchführen einer Schlupfregelung bei einem stufenlosen Getriebe, insbesondere einem Umschlingungsgetriebe, bei der ein antreibender Scheibensatz und ein angetriebener Scheibensatz über ein Umschlingungsmittel zur Momentenübertragung miteinander gekoppelt ist, mit Durchführen des Verfahrens nach einem der Ansprüche 1 bis 13, **dadurch gekennzeichnet, dass** eine Einrichtung zum Einlemen eines Kraftverhältnisses (Zeta) zwischen dem antreibenden Scheibensatz und dem getriebenen Scheibensatz eines Variators in Abhängigkeit von einem Sicherheitswert vorgesehen ist.

## Claims

1. Method for carrying out slip regulation in a continuously variable transmission, in particular in a wraparound transmission, in which a driving pulley set and a driven pulley set are coupled to one another by means of a wraparound mechanism for torque transmission, with a force ratio (Zeta) between the driving pulley set and the driven pulley set of a variator being taught in as a function of a safety value, with the safety value which is used being the force ratio, at an actual operating point, between the actual pressing force and the force at which slipping of the wraparound mechanism takes place, and **characterized in that** the method is carried out in virtually steady-state operating states of the transmission, with the force ratio (Zeta) being adapted in sections.

2. Method according to Claim 1, **characterized in that** the pressing force at the known slipping point at the driven pulley set is reduced until shortly before the slipping point in the wraparound mechanism is reached.

3. Method according to Claim 2, **characterized in that**, in the reduction of the pressing force, transmission ratio regulation in the variator is kept active and the change in the pressing force is compensated by means of corresponding activation of the pressure at at least one pulley set.

4. Method according to one of the preceding claims, **characterized in that** the force ratio is stored as a function of safety.

5. Method according to one of the preceding claims, **characterized in that** an operating state in the overdrive range (OD) while travelling at constant speed is used as a virtually steady-state operating state.

6. Method according to one of the preceding claims, **characterized in that** a transmission ratio of the variator with different values of the force ratio is run to successively in terms of time.

7. Method according to Claim 6, **characterized in that** the values of the force ratio (Zeta) determined in the respective operating states are stored and/or used in a parameterized model.

8. Method according to one of the preceding claims, **characterized in that** the force ratio (Zeta) is stored as a function of safety and the transmission ratio of the variator.

9. Method according to one of the preceding claims, **characterized in that** the pressure in the two pulley sets is estimated by calculating a theoretical pressure value from the known activation current of the hydraulic valves of the pulley sets.

10. Method according to one of the preceding claims, **characterized in that** a maximum of the force ratio (Zeta) is calculated during ongoing vehicle operation.

11. Method according to Claim 10, **characterized in that**, at a predefined pressing force at the driven pulley set, the input engine torque is increased such that slipping of the wraparound mechanism of the transmission occurs.

12. Method according to Claim 10, **characterized in that** the input engine torque is held constant and, in the process, the pressing force is lowered.

13. Method according to one of Claims 10 to 12, **characterized in that**, using taught Zeta maximum values, the operating parameters of the transmission are corrected in order to ensure an optimum pressing action.

14. Device for carrying out slip regulation in a continuously variable transmission, in particular a wraparound transmission, in which a driving pulley set and a driven pulley set are coupled to one another by means of a wraparound mechanism for torque transmission, with the method according to one of Claims 1 to 13 being carried out, **characterized in that** a device is provided for teaching in a force ratio (Zeta) between the driving pulley set and the driven pulley set of a variator as a function of a safety value.

## Revendications

1. Procédé pour mettre en oeuvre une régulation du patinage sur une transmission à variation continue, notamment une transmission à courroie, dans lequel on accouple l'un à l'autre un jeu de disques d'entraînement et un jeu de disques entraîné par le biais d'un moyen d'enveloppement pour le transfert de couple, un rapport de force (zêta) entre le jeu de disques d'entraînement et le jeu de disques entraîné d'un variateur étant appris en fonction d'une valeur de sécurité, le rapport de force étant utilisé en un point de fonctionnement effectif entre la force de pression proprement dite et la force à laquelle a lieu un patinage du moyen d'enveloppement, et **caractérisé en ce que** le procédé est mis en oeuvre dans des états de fonctionnement quasi-statiques de la transmission, le rapport de force (zêta) étant adapté par segments.

2. Procédé selon la revendication 1, **caractérisé en ce que** la force de pression est réduite au point de patinage connu sur le jeu de disques entraîné jusqu'à un point juste avant le point de patinage sur le moyen d'enveloppement.

3. Procédé selon la revendication 2, **caractérisé en ce que** lors de la réduction de la force de pression, une régulation de la démultiplication est maintenue active au niveau du variateur, et la variation de la force de pression est compensée par une commande correspondante de la pression au niveau d'au moins un jeu de disques.

4. Procédé selon l'une quelconque des revendications précédentes, **caractérisé en ce que** le rapport de force est stocké en tant que fonction de sécurité.

5. Procédé selon l'une quelconque des revendications précédentes, **caractérisé en ce que** l'on utilise comme état de fonctionnement quasi-statique, un état de fonctionnement dans la plage de surmultiplication (overdrive, OD) à conduite constante.

6. Procédé selon l'une quelconque des revendications précédentes, **caractérisé en ce qu'**un rapport de transmission du variateur est enclenché successivement dans le temps avec des valeurs différentes du rapport de force.

7. Procédé selon la revendication 6, **caractérisé en ce que** les valeurs du rapport de force (zêta) déterminées aux états de fonctionnement respectifs sont stockées et/ou utilisées dans un modèle paramétré.

8. Procédé selon l'une quelconque des revendications précédentes, **caractérisé en ce que** le rapport de force (zêta) est enregistré en fonction de la sécurité et du rapport de transmission du variateur.

9. Procédé selon l'une quelconque des revendications précédentes, **caractérisé en ce que** la pression dans les deux jeux de disques est estimée, en calculant à partir du courant de commande connu des soupapes hydrauliques de jeux de disques une valeur de pression théorique.

10. Procédé selon l'une quelconque des revendications précédentes, **caractérisé en ce que** l'on calcule pendant le fonctionnement continu du véhicule, un maximum du rapport de force (zêta).

11. Procédé selon la revendication 10, **caractérisé en ce que** pour une force de pression prédéfinie sur le jeu de disques entraîné, le couple moteur d'entrée est augmenté de telle sorte qu'il se produise un patinage du moyen d'enveloppement de la transmission.

12. Procédé selon la revendication 10, **caractérisé en ce que** le couple moteur d'entrée est maintenu constant et la force de pression est alors abaissée.

13. Procédé selon l'une quelconque des revendications 10 à 12, **caractérisé en ce que** l'on corrige avec les valeurs max de zêta apprises, les paramètres de fonctionnement de la transmission, afin de garantir une pression optimale.

14. Dispositif pour mettre en oeuvre une régulation du patinage sur une transmission à variation continue, notamment une transmission à courroie, dans lequel on accouple l'un à l'autre un jeu de disques d'entraînement et un jeu de disques entraîné par le biais d'un moyen d'enveloppement pour le transfert de couple, en mettant en oeuvre le procédé selon l'une quelconque des revendications 1 à 13, **caractérisé en ce que** l'on prévoit un dispositif pour apprendre un rapport de force (zêta) entre le jeu de disques d'entraînement et le jeu de disques entraîné d'un variateur en fonction d'une valeur de sécurité.
